Europäisches Patentamt

European Patent Office

Office européen des brevets

(19)

(11) **EP 1 306 984 A1**

(12) **EUROPEAN PATENT APPLICATION**
published in accordance with Art. 158(3) EPC

(43) Date of publication:
**02.05.2003 Bulletin 2003/18**

(51) Int Cl.[7]: **H04B 7/216**, H04J 13/02

(21) Application number: **00938469.4**

(86) International application number:
**PCT/CN00/00179**

(22) Date of filing: **26.06.2000**

(87) International publication number:
**WO 02/001759 (03.01.2002 Gazette 2002/01)**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **LinkAir Communications, Inc.
San Jose, California 95134 (US)**

(72) Inventor: **LI, Daoben
Beijing 100044 (CN)**

(74) Representative: **Nicholls, Michael John
J.A. KEMP & CO.,
14, South Square,
Gray's Inn
London WC1R 5JJ (GB)**

(54) **A METHOD OF CONSTRUCTING QUADRATURE SPREAD SPECTRUM CODE BLOCKS**

(57) This invention discloses a forming method for multiple access code with zero correlation window in code division multiple access communication system. First, transform an N bits length spread spectrum code with period auto-correlation ideal function to an orthogonal group of spread spectrum code. Then, according to the required width of zero correlation window, expand each code's length to N+2*(width of zero correlation window) bits long. The expanded code is used for spread operation, and the non-expanded code is used for despread operation. Therefore, the code division multiple access system is without ISI completely, and the MAI is greatly decreased.

FIG. 1

EP 1 306 984 A1

**Description**

<u>Field of the Invention</u>

The present invention relates to spread spectrum technology and code division multiple access (CDMA) wireless communication technology, and more particularly to a method for forming a mutually orthogonal group of spread spectrum code from a spread spectrum code with well auto-correlation characteristic in the cellular mobile communication system.

<u>Background of the Invention</u>

With the coming of the information society and the personal communication era, it becomes a more and more need that people require increasing capacity and quality of the cellular mobile communication system. The best choice, which can satisfy the above requirement, is to use spread spectrum and code division multiple access communication system. The quality, weather it is good of worse, of a spread spectrum and code division multiple access communication system is determined by the selection of spread spectrum code.

It is known that a cellular mobile communication channel is a typical random time-vary channel, and there are random angle dispersion, random frequency dispersion (produced by Doppler frequency shift) and random time dispersion (produced by multipath propagation). Angle dispersion produces spatial-selective fading, i.e. signal at different receiving point fluctuates differently and randomly. Frequency dispersion produces time-selective fading, i.e. received signal fluctuates randomly with time. Time dispersion produces frequency-selective fading, i.e. different frequency spectrum components of received signal fluctuates differently and randomly. The fading deteriorates system performance seriously and at the same time reduces system capacity greatly. The only way to overcome fading is diversity. Besides the conventional evident diversity technology, in the spread spectrum and code division multiple access system, a potential diversity effect can be reached by selecting well performance spread spectrum code.

It is proved theoretically and practically that the best non-period auto-correlation function of spread spectrum code should be without side-lobe value completely, i.e., except origin all the value of non-period auto-correlation function should be zero. For the best group of spread spectrum multiple access code, it is required that not only every non-period auto-correlation function without side-lobe value completely but also every non-period cross-correlation function with zero everywhere. This means that the non-period cross-correlation function is not only zero side-lobe value but also zero value at origin. Unfortunately, theory and the result of popular computer searching prove that there is no best spread spectrum code and code group under complex number field.

The application document (PCT Application No.: PCT/CN00/00028, Invented by Daoben Li), title: "Coding Method for Spread Spectrum Multiple Access Code with Zero Correlation Window", points out that under dual direction synchronization, the requirement for best spread spectrum multiple access code can be decreased. That means the requirement is as follows:

Side-lobe value equals to zero within a window $(-\Delta, \Delta)$ for non-period auto-correlation function of spread spectrum multiple access code, and there is zero everywhere within the window $(-\Delta, \Delta)$ for non-period cross-correlation function of spread spectrum multiple access code.

Where $\Delta$ represents maximum time dispersion plus maximum timing error. That invention also gives a method for constructing multiple access code with the window $(-\Delta, \Delta)$, said above, but the code is beyond the said field which under complex number.

The application document (PCT Application No.: PCT/CN00/00092, Invented by Daoben Li), title "Orthogonal Transformation Method for Spread Spectrum Multiple Access Coding" discloses a method which transforms a spread spectrum code to an orthogonal group of spread spectrum access code by using orthogonal rotating transformation. The most characteristic of the transformation is after different orthogonal rotating transformation, every code is orthogonal with each other; and at the same time the auto-correlation function of each code produced is same as the original, except some fixed phase shift has been introduced.

<u>Summary of the Invention</u>

The present invention provides a method for constructing an orthogonal group of spread spectrum multiple access codes. In the group, the non-period auto-correlation function of every multiple access code, exists a zero correlation window, and its width can be varied by practical need. Although the non-period cross-correlation function of every multiple access code does not definitely exist a zero correlation window, but the cross-correlation side lobe value is all very small which satisfies the practical engineering requirement.

The invention is a method for constructing orthogonal group of spread spectrum multiple access code, which is comprised of the following steps:

Select a spread spectrum code with periodic auto-correlation ideal function and in a length of N bits.

Transform the spread spectrum code selected with orthogonal rotation to form an orthogonal group of spread spectrum code, which has N sequences and they are completely orthogonal with each other.

According to the required width $\Delta$ of zero correlation window, increase $\Delta$ bits to the head and trail, respectively, of each sequence, produced by the previous said step, to form an expanded new sequence with a length of N+2$\Delta$ bits.

From the orthogonal spread spectrum code produced by the previous said step, form an expanded group of spread spectrum code, with length N+2$\Delta$ bits.

Select sequences with smaller cross-correlation function, from the non-period cross-correlation function of all the sequences, produced by the steps above.

The new orthogonal group of spread spectrum code, which is remained after selection above, is used for spread operation in user transmitter. With the same orthogonal group of spread spectrum code, after taking head $\Delta$ bits and trial $\Delta$ bits out of each sequence, i.e. setting them to zero, is used for de-spread operation in the user receiver.

The expansion, said above, takes head $\Delta$ bits and trail $\Delta$ bits out of each spread spectrum multiple access code; and puts them in the trail and head of the corresponding code to form an expanded spread spectrum multiple access code, with length N+2$\Delta$ bits.

The advantages of the invention are:

Whenever a spread spectrum code with period auto-correlation ideal function has been found, with the invention it can be expanded to a mutual orthogonal group of spread spectrum code. Within the code group, the period auto-correlation function of every multiple access code keeps its ideal characteristics.

The invention transfers the searching problem for spread spectrum multiple access code, which has non-period correlation function with zero correlation window, to the searching problem for spread spectrum multiple access code, which has period correlation ideal function. It simplifies the searching method and extends the searching extent.

The properties of the orthogonal group of spread spectrum code, provided by the invention, are substantially independent with the original phase of each spread spectrum code. More precisely, the auto-correlation function of each spread spectrum code is totally independent with its original phase, and for cross-correlation function, the original. phase only introduces a fixed phase shift. In this way, the orthogonal group of spread spectrum code, provided by the invention, can bear, in a certain degree, the Doppler frequency shift and channel phase swing.

The Drawings

Figure 1 is a schematic diagram for relationship of periodic correlation (including auto-correlation and cross-correlation) operation.

Figure 2 is a schematic diagram for relationship of non-periodic correlation (including auto-correlation and cross-correlation) operation.

Detail Description of the Invention

With embodiment and the drawings, the invention is described in detail in the following.

The specific steps of the invention are as followings.

1. Select optionally a spread spectrum code of periodic auto-correlation ideal function with a length of N:

$$b_0 = [b_0, b_1, b_2, ..., b_{N-2}, b_{N-1}]$$

The ideal periodic auto-correlation function is:

$$\mathbf{r}_b(k) = \frac{1}{\|\mathbf{b}\|^2} \sum_{n=0}^{N-1} b_n b^*_{n+k} \mod N, \quad |k| \le N$$

$$= \begin{cases} 1 & k = 0 \\ 0 & k \neq 0 \end{cases}$$

Where mod N is modular operation N; * is conjugation of complex number;

$$\|\mathbf{b}\|^2 \overset{\Delta}{=} \sum_{n=0}^{N-1} b_n b_n^*$$

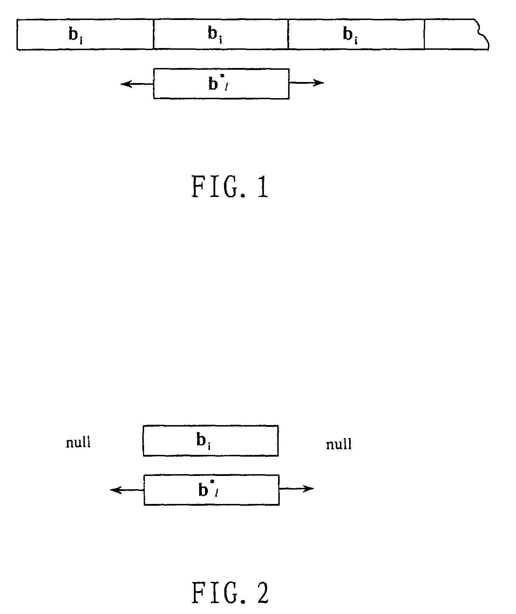

Reference to Figure 1, it is a operation relationship diagram of periodic correlation function $\mathbf{r_{b_ib_i}}$ (**k**) (including auto-correlation and cross-correlation); among them, * represents conjugation of complex number, arrow represents shift direction, shift zone is the whole code length and k is shift bits.

Taking the broadcast spread spectrum code of large area synchronous CDMA system (LAS-CDMA) as an example, basic sequence $\mathbf{b}_0$ is an ternary sequence with 21 bits length:

$$b_0 = [+++++-+0+0-++-00+-0--]$$

It is easily proven that the period auto-correlation function is ideal perfectly by operation, and any circular shift sequence of $\mathbf{b}_0$ has perfect auto-correlation ideal function too.

2. Implement $\mathbf{b}_0$ transformation with orthogonal rotation (refer to application document "Orthogonal Transformation Method for Spread Spectrum Multiple Access Coding" with PCT Application No.: PCT/CN00/00092). It forms an orthogonal group of spread spectrum code, $\{\mathbf{b}_0, \mathbf{b}_1 ,..., b_{N-1}\}$, which has N sequences, they are completely orthogonal with each other; among them:

$$b_0 = [b_0, b_1, b_2, ..., b_{N-2}, b_{N-1}]$$

$$b_1 = [b_0, b_1 e^{j\Delta\varphi}, b_2 e^{j2\Delta\varphi}, ..., b_{N-2} e^{j(N-2)\Delta\varphi}, b_{N-1} e^{j(N-1)\Delta\varphi}]$$

$$b_2 = [b_0, b_1 e^{j2\Delta\varphi}, b_2 e^{j4\Delta\varphi}, ..., b_{N-2} e^{j2(N-2)\Delta\varphi}, b_{N-1} e^{j2(N-2)\Delta\varphi}]$$

$$b_k = [b_0, b_1 e^{jk\Delta\varphi}, b_2 e^{j2k\Delta\varphi}, ..., b_{N-2} e^{jk(N-2)\Delta\varphi}, b_{N-1} e^{jk(N-1)\Delta\varphi}]$$

$$b_{N-1} = [b_0, b_1 e^{j(N-1)\Delta\varphi}, b_2 e^{j2(N-1)\Delta\varphi}, ..., b_{N-2} e^{j(N-1)(N-2)\Delta\varphi}, b_{N-1} e^{j(N-1)(N-1)\Delta\varphi}]$$

where $\Delta\varphi = \frac{2\pi}{N}$.

Obviously, forming by orthogonal rotating transformation, any of sequences $\mathbf{b}_l$ ($l = 0,1,..., N - 1$) has periodic auto-correlation ideal function. In addition, as between any two sequences the relative rotations are all integral periods, everyone is orthogonal with each other in the sequences. Therefore, with orthogonal rotating transformation, from a sequence of periodic auto-correlation ideal function, N mutual orthogonal sequences can be produced which are sequences with periodic auto-correlation ideal function.

3. According to the required width $\Delta$ of zero correlation window, each sequence b, ($l = 0,1,..., N - 1$) in the sequence groups produced by step 2, increases $\Delta$ bits at its head and trial, respectively, with the following rules to form a new sequence $\mathbf{a}_l$, with length N+2$\Delta$ bits.

**4**

$$\mathbf{a}_0 = [\underbrace{b_{N-\Delta+1}, b_{N-\Delta+2}, ..., b_{N-1}}_{\substack{\text{last } \Delta \text{ bits of} \\ \text{original } \mathbf{b}_0 \text{ sequence}}}, \underbrace{b_0, b_1, b_2, ..., b_{N-2}}_{\text{original } \mathbf{b}_0 \text{ sequence}}, \underbrace{b_{N-1}, b_0, b_1, ..., b_{\Delta-1}}_{\substack{\text{first } \Delta \text{ bits of} \\ \text{original } \mathbf{b}_0 \text{ sequence}}}]$$

......

$$\mathbf{a}_l = [b_{N-\Delta+1}e^{j(N-\Delta+1)l\Delta\varphi}, b_{N-\Delta+2}e^{j(N-\Delta+2)l\Delta\varphi}, ..., b_{N-1}e^{j(N-1)l\Delta\varphi} \quad \text{last } \Delta \text{ bits of original } \mathbf{b}_l \text{ sequence}$$
$$b_0, b_1 e^{jl\Delta\varphi}, b_2 e^{j2l\Delta\varphi}, ..., b_{N-2}e^{j(N-2)l\Delta\varphi}, b_{N-1}e^{j(N-1)l\Delta\varphi}, \quad \text{original } \mathbf{b}_l \text{ sequence}$$
$$b_0, b_1 e^{jl\Delta\varphi}, ..., b_{\Delta-1}e^{j(\Delta-1)l\Delta\varphi}] \quad \text{first } \Delta \text{ bits of original } \mathbf{b}_l$$

$$(\, l = 0, 1, ..., N-1 \,)$$

That is, the first $\Delta$ bits of new sequences $\mathbf{a}_l$ ( $l = 0,1,..., N - 1$ ) are the last $\Delta$ bits of original sequences $\mathbf{b}_l$ ( $l = 0,1,..., N - 1$ ) , the last $\Delta$ bits of new sequences $\mathbf{a}_l$ ( $l = 0,1,..., N - 1$ ) are the first $\Delta$ bits of the original sequences $\mathbf{b}_l$ ( $l = 0,1,...,N$-1), and the middle N bits of new sequences $\mathbf{a}_l$ ( $l = 0,1,..., N$-1) are the original sequences $\mathbf{b}_l$ ( $l = 0,1,..., N - 1$ ).

For example, if the original sequence with periodic auto-correlation ideal function is a ternary sequence with 21 bits length:

$$b_0 = [+++++-+0+0-++-00+-0--],$$

The required width of zero correlation window is $\Delta = 4$, then $\mathbf{a}_0$ should be:

$$\mathbf{a}_0 = [\underbrace{-0--}_{\text{last 4 bits of } \mathbf{b}_0}, \underbrace{+++++-+0+0-++-00+-0--}_{\mathbf{b}_0}, \underbrace{++++}_{\text{First 4 bits of } \mathbf{b}_0}]$$

The purpose of what have done is to transfer non-periodic correlation characteristics to periodic correlation operation. Reference to Figure 2, it is a relationship diagram of non-periodic correlation function $\mathbf{r}_{\mathbf{b}_i\mathbf{b}_i}$ (k) operation (including auto-correlation and cross-correlation), because in communication system the required correlation characteristics should be all with non-periodic correlation characteristics; among them, * represents conjugation of complex number, arrow represents shift direction, shift zone is the whole code length and k is shift bits.

Obviously, when $\mathbf{b}_l$ is still inside $\mathbf{a}_l$ by mutually shifting, the non-periodic cross-correlation function between $\mathbf{b}_l$ and $\mathbf{a}_l$ ( $l = 0,1,..., N$-1 ) is just itself periodic auto-correlation function of $\mathbf{b}_l$. Here, the head $\Delta$ bits and trial $\Delta$ bits of $\mathbf{a}_l$ ensure that the width of zero correlation window is (-$\Delta$, $\Delta$); the spread spectrum is functioned by the N bits in the middle, in real.

4. According to the required width $\Delta$ of zero correlation window, the orthogonal group, produced by step 2, is lengthened by the rules, said above at step 3, to form a spread spectrum code group with sequences in length N+2$\Delta$ bits. The result is:

$$\mathbf{a}_0 = [b_{N-\Delta+1}, b_{N-\Delta+2}, ..., b_{N-1}, b_0, b_1, b_2, ..., b_{N-2}, b_{N-1}, b_0, b_1, ..., b_{\Delta-1}]$$

$$......$$

$$\mathbf{a}_l = [b_{N-\Delta+1}e^{j(N-\Delta+1)l\Delta\varphi}, b_{N-\Delta+2}e^{j(N-\Delta+2)l\Delta\varphi}, ..., b_{N-1}e^{j(N-1)l\Delta\varphi},$$
$$b_0, b_1 e^{jl\Delta\varphi}, b_2 e^{j2l\Delta\varphi}, ..., b_{N-2}e^{j(N-2)l\Delta\varphi}, b_{N-1}e^{j(N-1)l\Delta\varphi},$$
$$b_0, b_1 e^{jl\Delta\varphi}, ..., b_{\Delta-1}e^{j(\Delta-1)l\Delta\varphi}]$$

$$\text{where } l = 0, 1, ..., N-1.$$

Obviously, when $\mathbf{b}_l$ is still inside the two boundaries of $\mathbf{a}_l$ by mutually shifting, the non-periodic cross-correlation function between $\mathbf{b}_l$ and $\mathbf{a}_l$ is just the periodic auto-correlation function of $\mathbf{b}_l$. This is a feature what we use to transfer periodic correlation function to non-periodic correlation function.

5. Selecting the sequences, which have smaller cross-correlation function, from all non-periodic cross-correlation functions between $\mathbf{b}_l$ and $\mathbf{a}_{l'}$.($l$, $l'$ = 0,1,..., $N$ - 1, $l \neq l'$), the remains are $N_0 \leq N$ sequences, which form a new { $\mathbf{b}_l$ } and { $\mathbf{a}_l$ }, ( $l$ = 0,1,..., $N$ - 1).

Here, $l$ shows a new sequence sorting without relationship with the original sequence sorting.

6. New { $\mathbf{a}_l$ }, the remains by selecting at step 5, is a orthogonal group of spread spectrum code, which is used for spread spectrum operation in user transmitter. In user receiver, only the correspondent { $\mathbf{b}_l$ }, which is the middle part of { $\mathbf{a}_l$ } after taking out the head $\Delta$ bits and trial $\Delta$ bits respectively, is used for de-spread operation.

## Claims

1. A forming method for orthogonal group of spread spectrum code used in the code division multiple access communication system, comprising:

   select a spread spectrum code with periodic auto-correlation ideal function and in a length of N bits, transform it with orthogonal rotation, and form an orthogonal group of spread spectrum code, with N sequences in total; according to the required width of zero correlation window, each sequence, said above, expands to N+2$\Delta$ bits, and forms an expanded orthogonal group of spread

   spectrum code with a length of N+2$\Delta$ bits; and

   take spread operation with the expanded orthogonal group of spread spectrum code, and take de-spread operation with the non-expanded orthogonal group of spread spectrum code.

2. The method of claim 1, wherein it is **characterized that**:

   the said expansion takes head $\Delta$ bits and trail $\Delta$ bits of each spread spectrum multiple access code to the trail and head of the corresponding code respectively, to form an expanded spread spectrum multiple access code with a length of N+2$\Delta$ bits.

3. The method of claim 2, wherein it is **characterized that**:

   each expanded spread spectrum multiple access code with a length of N+2$\Delta$ bits is

   used for spread operation in transmitter; with the same code, after taking out each sequence's head $\Delta$ bits and trial $\Delta$ bits, i.e. setting them to zero, is used for de-spread operation in receiver.

4. The method of claim 1, wherein it is **characterized that**:

   the said width of zero correlation window is equal to or greater than maximum time dispersion plus maximum timing error of the channel.

**5.** The method of claim 1, 2 or 3, wherein it is **characterized that**:

The expanded orthogonal group of spread spectrum code with a length of $N+2\Delta$

bits, is selected, then the remains are good performance, which forms the orthogonal group of spread spectrum code and is used for spread operation in transmitter; with the same code, after taking out the $\Delta$ bits at the head and trail respectively, forms another spread spectrum code group which is used for de-spread operation in receiver.

FIG. 1

FIG. 2

<div style="text-align: center">

**INTERNATIONAL SEARCH REPORT**

</div>

| | International application No. |
|---|---|
| | PCT/CN00/00179 |

**A. CLASSIFICATION OF SUBJECT MATTER**

H04B7/216 H04J13/02

According to International Patent Classification (IPC) or to both national classification and IPC

**B. FIELDS SEARCHED**

Minimum documentation searched (classification system followed by classification symbols)

IPC[7] H04B7/216 H04J13/00 13/02 13/04

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | EP-A- 0818901(LUCENT TECHNOLOGIES INC)14.Jan 1998(14.01.98)<br>The whole document | 1-5 |
| A | EP-A- 0717520(NEC CORP & NIPPON ELECTRIC CO)19.Jun 1996(19.06.96)<br>The whole document | 1-5 |

☐ Further documents are listed in the continuation of Box C. ☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim (S) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document·member of the same patent family |

| Date of the actual completion of the international search | Date of mailing of the international search report |
|---|---|
| 12.Feb 2001(12.02.01) | |

| Name and mailing address of the ISA/CN | Authorized officer |
|---|---|
| 6 Xitucheng Rd., Jimen Bridge, Haidian District, 100088 Beijing, China | Wang Tao |
| Facsimile No. 86-10-62019451 | Telephone No. 86-10-62093049 |

Form PCT/ISA /210 (second sheet) (July 1998)

<table>
<tr><td align="center">INTERNATIONAL SEARCH REPORT<br>Information on patent family members</td><td colspan="2">International application No.<br>PCT/CN00/00179</td></tr>
</table>

| Patent document cited in search report | Publication date | Patent family member(s) | Publication date |
|---|---|---|---|
| EP-A-0818901 | 14.01.98 | US-A-5737326 | 07.04.98 |
| | | JP-A-10079722 | 24.03.98 |
| | | CA-A-2205818 | 12.01.98 |
| EP-A-0717520 | 19.06.96 | JP-A-8163087 | 21.06.96 |
| | | US-A-5734647 | 31.03.98 |

Form PCT/ISA /210 (patent family annex) (July 1998)